# EUROPEAN PATENT APPLICATION

(11) **EP 4 622 143 A1**
(43) Date of publication of application: **24.09.2025**
(21) Application number: 24165385.6
(22) Date of filing: 22.03.2024
(51) Int. Cl.: H04B 17/391, H04W 16/00

(54) **APPARATUS AND METHOD FOR A COMMUNICATION SYSTEM**

(71) Applicant: Nokia Solutions and Networks Oy, 02610 Espoo (FI)
(72) Inventor: DOLL, Mark, Stuttgart (DE); WILD, Thorsten, Stuttgart (DE); SCHAICH, Frank, Stuttgart (DE)
(74) Representative: Nokia EPO representatives

(57) **Abstract**

An apparatus for a communication system, the apparatus comprising at least one processor, and at least one memory storing instructions that, when executed by the at least one processor, cause the apparatus to: determine first information characterizing at least one of a) static clutter, or b) semistatic clutter within a region surrounding at least one transmission and reception point, determine, based at least on the first information, second information characterizing a space for line-of-sight signal exchange with the at least one transmission and reception point.

## Description

### Field of the Disclosure

Various example embodiments relate to an apparatus for a communication system.

Further example embodiments relate to a method for a communication system.

### Background

Communication systems such as, e.g., wireless communication systems may be used for wireless exchange of information between two or more entities, e.g., comprising one or more terminal devices, e.g., user equipment (UE), and one or more network devices such as, e.g., base stations.

In some approaches, sensing can be performed using components of a wireless communication system. In some approaches, sensing may refer to detecting, e.g., based on reflected and/or scattered radio signals, physical objects, e.g., within an area associated with, e.g., covered by, the wireless communication system.

### Summary

Various example embodiments of the disclosure are set out by the independent claims. The example embodiments and features, if any, described in this specification, that do not fall under the scope of the independent claims, are to be interpreted as examples useful for understanding various example embodiments of the disclosure.

Some examples relate to an apparatus for a communication system, the apparatus comprising at least one processor, and at least one memory storing instructions that, when executed by the at least one processor, cause the apparatus to: determine first information characterizing at least one of a) static clutter, or b) semi-static clutter within a region surrounding at least one transmission and reception point, TRP, determine, based at least on the first information, second information characterizing a space for line-of-sight signal exchange with the at least one transmission and reception point. In some examples, the second information may be used to control at least some aspects of operation of at least some components of the communication system.

In some examples, e.g., with respect to sensing, objects or targets, e.g., all targets, that are produced by a (semi-)static environment may be referred to as clutter.

In some examples, the communication system may adhere to and/or may be based on some accepted (and/or planned) specification, e.g., standard, such as, e.g., 3G, 4G, 5G, 6G, or some other wireless communication standard.

In some examples, the apparatus for the communication system may be a network device, e.g., a base station, e.g., gNB.

In some examples, the apparatus for the communication system may be a sensing access point, SAP. In some examples, the sensing access point may, e.g., be a base station, e.g., a 6G base station. In some examples, the sensing access point may, e.g., be a mobile terminal.

In some examples, the apparatus for the communication system may implement a sensing management function, SeMF.

In some examples, the second information represents a map for the line-of-sight signal exchange with the at least one transmission and reception point.

In some examples, the instructions, when executed by the at least one processor, cause the apparatus to: transmit, e.g., signal, the second information, e.g., to at least one further entity.

As an example, e.g., if the apparatus for the communication system is a base station, e.g., gNB, in some examples, the apparatus or gNB may transmit, e.g., signal, the second information to the at least one further entity, such as, e.g., an SeMF entity.

As a further example, e.g., if the apparatus for the communication system is an SeMF entity, in some examples, the apparatus or SeMF entity may transmit, e.g., signal, the second information to the at least one further entity, such as, e.g., a base station, e.g., gNB.

In some examples, the instructions, when executed by the at least one processor, cause the apparatus to: perform sensing, using at least one signal associated with the communication system, determine the first information based at least on the sensing.

In some examples, the instructions, when executed by the at least one processor, cause the apparatus to perform at least one of: a) performing at least one of a1) the determining of the first information, or a2) the sensing for a predetermined time, or b) performing repeatedly at least one of b1) the determining of the first information, or b2) the sensing.

In some examples, the predetermined time is equal to or exceeds at least one of: a) a multiple of a symbol duration of the communication system, or b) one minute.

In some examples, the instructions, when executed by the at least one processor, cause the apparatus to: determine model information characterizing at least one aspect of the region surrounding at least one transmission and reception point, determine at least one of first information and second information based on the model information.

In some examples, the instructions, when executed by the at least one processor, cause the apparatus to: determine third information characterizing a boundary of the space for line-of-sight signal exchange with the at least one transmission and reception point, signal at least a portion of the boundary using the third information.

In some examples, the instructions, when executed by the at least one processor, cause the apparatus to: perform sensing for a target, determine, based on at least one of a) the sensing, or b) the second information, at least one of c1) a position of the target, or c2) a probability that the target is within a line-of-sight region of at least one transmission and reception point.

In some examples, the instructions, when executed by the at least one processor, cause the apparatus to: evaluate the probability that the target is within the line-of-sight region of the least one transmission and reception point, and, based on the evaluation, report at least one of a) the position of the target, or b) the probability that the target is within the line-of-sight region of the at least one transmission and reception point.

In some examples, the instructions, when executed by the at least one processor, cause the apparatus to: determine whether the position of the target is within the line-of-sight region of the least one transmission and reception point, report, based on the determination, the position of the target.

In some examples, the instructions, when executed by the at least one processor, cause the apparatus to: filter semi-permeable clutter based on at least one of: a) longer-term sensing, or b) incorporating sensing information from at least one further transmission and reception point, or c) applying a machine learning technique.

In some examples, the instructions, when executed by the at least one processor, cause the apparatus to: use at least one of a) the first information, or b) the second information, or c) the map for determining information associated with a target that is outside a line-of-sight region of the least one transmission and reception point.

Some examples relate to an apparatus for a communication system, the apparatus comprising means for: determining first information characterizing at least one of a) static clutter, or b) semi-static clutter within a region surrounding at least one transmission and reception point, determining, based at least on the first information, second information characterizing a space for line-of-sight signal exchange with the at least one transmission and reception point.

Some examples relate to a network device, e.g., base station, e.g., gNB, comprising at least one apparatus according to the disclosure.

In some examples, the network device may be a sensing access point, SAP.

In some examples, the network device may implement a sensing management function, SeMF.

Some examples relate to a communication system comprising at least one apparatus according to the disclosure.

Some examples relate to a method for a communication system, comprising: determining first information characterizing at least one of a) static clutter, or b) semi-static clutter within a region surrounding at least one transmission and reception point, determining, based at least on the first information, second information characterizing a space for line-of-sight signal exchange with the at least one transmission and reception point.

Some examples relate to a computer program comprising instructions which, when executed by an apparatus, cause the apparatus to perform at least some aspects of the method according to the disclosure.

In some examples, the computer program may be provided on a computer readable storage medium, e.g., a non-transitory computer readable medium.

Some examples relate to a data carrier signal carrying and/or characterizing the computer program according to the disclosure.

### Brief Description of the Figures

- Fig. 1A: schematically depicts a simplified block diagram according to some examples,
- Fig. 1B: schematically depicts a simplified block diagram according to some examples,
- Fig. 2: schematically depicts a simplified block diagram according to some examples,
- Fig. 3: schematically depicts a simplified flow chart according to some examples,
- Fig. 4: schematically depicts a simplified flow chart according to some examples,
- Fig. 5: schematically depicts a simplified flow chart according to some examples,
- Fig. 6: schematically depicts a simplified flow chart according to some examples,
- Fig. 7: schematically depicts a simplified flow chart according to some examples,
- Fig. 8: schematically depicts a simplified flow chart according to some examples,
- Fig. 9: schematically depicts a simplified flow chart according to some examples,
- Fig. 10: schematically depicts a simplified flow chart according to some examples,
- Fig. 11: schematically depicts a simplified flow chart according to some examples,
- Fig. 12: schematically depicts a simplified block diagram according to some examples,
- Fig. 13A: schematically depicts a simplified flow chart according to some examples,
- Fig. 13B: schematically depicts a simplified flow chart according to some examples,
- Fig. 14A: schematically depicts a simplified flow chart according to some examples,
- Fig. 15B: schematically depicts a simplified flow chart according to some examples,

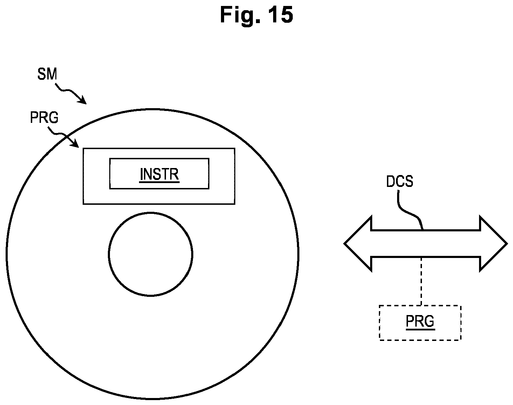

- Fig. 15: schematically depicts a simplified block diagram according to some examples.

### Description of some Example Embodiments

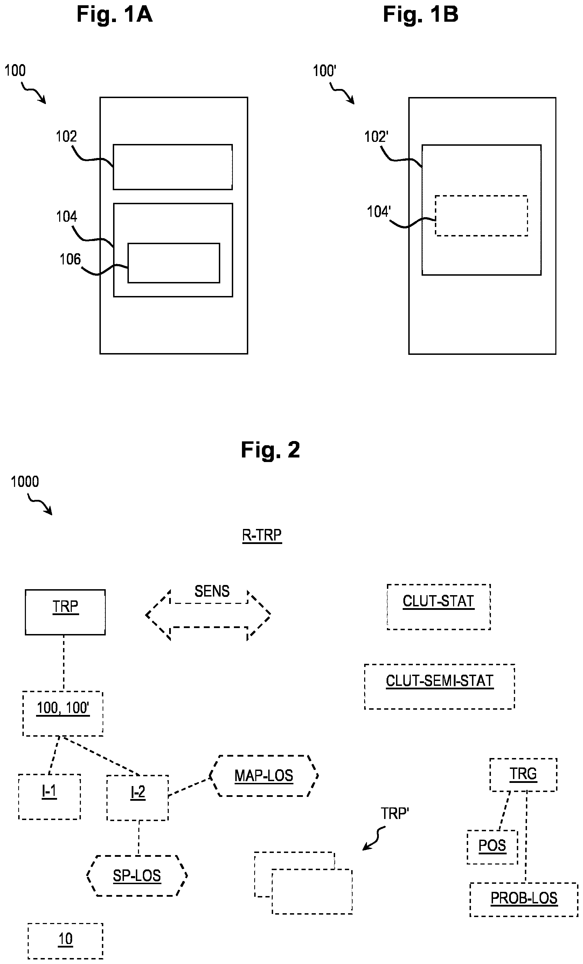

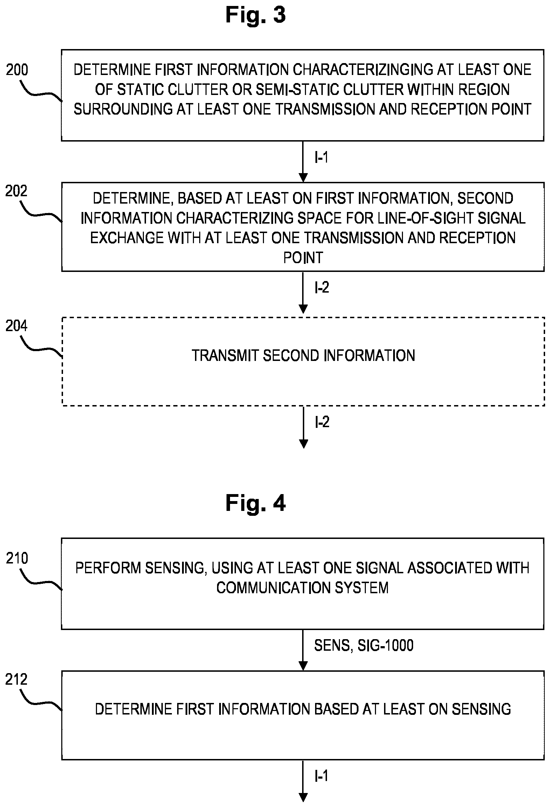

Some examples, see Fig. 1A, 2, 3, relate to an apparatus 100 for a communication system 1000, the apparatus 100 comprising at least one processor 102, and at least one memory 104 storing instructions 106 that, when executed by the at least one processor 102, cause the apparatus 100 to: determine 200 (Fig. 3) first information I-1 characterizing at least one of a) static clutter CLUT-STAT (Fig. 2), or b) semi-static clutter CLUT-SEMI-STAT within a region R-TRP surrounding at least one transmission and reception point, TRP, determine 202, based at least on the first information I-1, second information I-2 characterizing a space SP-LOS for line-of-sight ("LOS") signal exchange with the at least one transmission and reception point TRP. In some examples, the second information I-2 may be used to control at least some aspects of operation of at least some components of the communication system 1000.

In some examples, the communication system 1000 may adhere to and/or may be based on some accepted (and/or planned) specification, e.g., standard, such as, e.g., 3G, 4G, 5G, 6G, or some other wireless communication standard.

In some examples, the apparatus 100 for the communication system 1000 may be a network device 10, e.g., a base station, e.g., gNB. In some examples, the apparatus 100 for the communication system 1000 may be provided for a network device 10. In some examples, at least one transmission and reception point TRP, TRP' may be associated with the network device 10.

In some examples, the apparatus 100 for the communication system 1000 may be a sensing access point, SAP. In some examples, the sensing access point may, e.g., be a base station, e.g., a 6G base station. In some examples, the sensing access point may, e.g., be a mobile terminal.

In some examples, the apparatus 100 for the communication system may implement a sensing management function, SeMF.

In some examples, Fig. 2, the second information I-2 represents a map MAP-LOS (e.g., topological and/or geographical representation) for the line-of-sight signal exchange with the at least one transmission and reception point TRP.

In some examples, Fig. 3, the instructions 106, when executed by the at least one processor 102, cause the apparatus 100 to: transmit 204, e.g., signal, the second information I-2, e.g., to at least one further entity. In some examples, alternatively or additionally to the second information I-2, information derived from the second information I-2 may also be transmitted, e.g., in block 204 of Fig. 3.

As an example, e.g., if the apparatus 100 for the communication system is a base station, e.g., gNB, in some examples, the apparatus or gNB may transmit, e.g., signal, the second information to the at least one further entity, such as, e.g., an SeMF entity.

As a further example, e.g., if the apparatus 100 for the communication system is an SeMF entity, in some examples, the apparatus or SeMF entity may transmit, e.g., signal, the second information I-2 to the at least one further entity, such as, e.g., a base station, e.g., gNB.

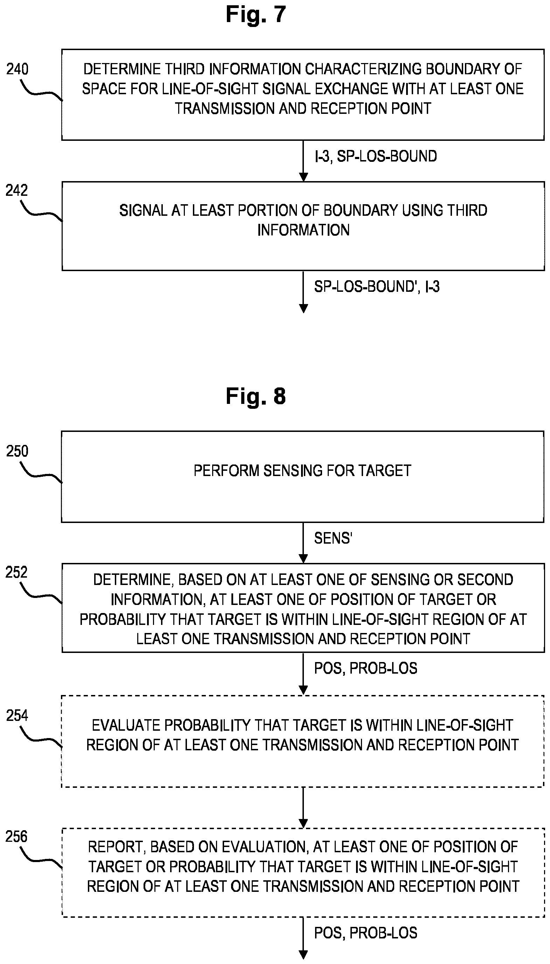

Further below, various example information elements are disclosed, e.g., by tables 1, 2, 3, 4, at least some of which may, in some examples, be used for transmitting, e.g., signaling, the second information and/or information derived from the second information, such as, e.g., third information I-3 characterizing a boundary SP-LOS-BOUND (see block 240 of Fig. 7) of the space SP-LOS (Fig. 2) for line-of-sight signal exchange with the at least one transmission and reception point TRP.

In some examples, Fig. 4, the instructions 106, when executed by the at least one processor 102, cause the apparatus 100 to: perform 210 sensing SENS, using at least one signal SIG-1000 associated with the communication system 1000, determine 212 the first information I-1 based at least on the sensing SENS. Block 212 of Fig. 4 symbolizes determining the first information I-1 based at least on the sensing SENS, according to some examples.

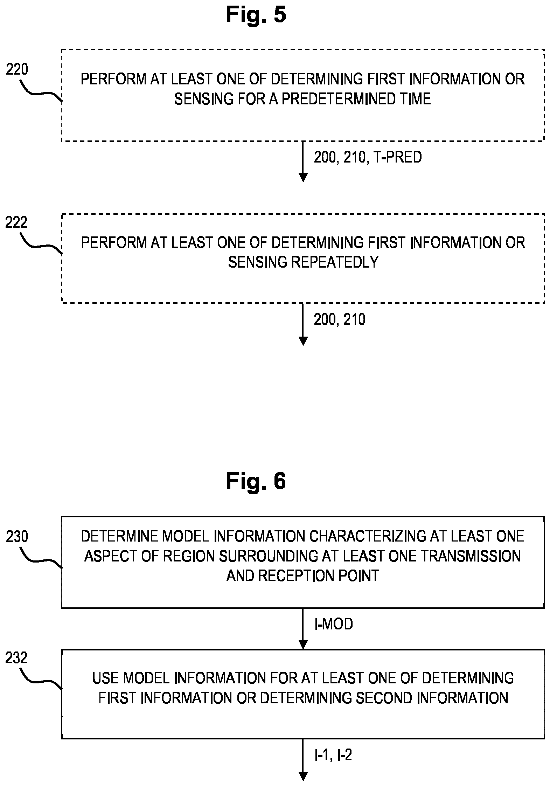

In some examples, Fig. 5, the instructions 106, when executed by the at least one processor 102, cause the apparatus 100 to perform at least one of: a) performing 220 at least one of a1) the determining 200 of the first information I-1, or a2) the sensing 210, SENS for a predetermined time T-PRED, or b) performing 222 repeatedly at least one of b1) the determining 200 of the first information I-1, or b2) the sensing 210, SENS.

In some examples, the predetermined time T-PRED is equal to or exceeds at least one of: a) a multiple of a symbol duration of the communication system 1000 (Fig. 2), or b) one minute.

In some examples, Fig. 6, the instructions 106, when executed by the at least one processor 102, cause the apparatus 100 to: determine 230 model information I-MOD characterizing at least one aspect of the region R-TRP surrounding at least one transmission and reception point TRP, determine 232 at least one of the first information I-1 and the second information I-2 based on the model information I-MOD.

In some examples, Fig. 7, the instructions 106, when executed by the at least one processor 102, cause the apparatus 100 to: determine 240 third information I-3 characterizing a boundary SP-LOS-BOUND of the space SP-LOS (Fig. 2) for line-of-sight signal exchange with the at least one transmission and reception point TRP, signal 242 at least a portion SP-LOS-BOUND' of the boundary SP-LOS-BOUND using the third information I-3.

In some examples, Fig. 8, the instructions 106, when executed by the at least one processor 102, cause the apparatus 100 to: perform 250 sensing SENS' for a target TRG (e.g., a physical object in the region R-TRP, see Fig. 2), determine 252 (Fig. 8), based on at least one of a) the sensing SENS', or b) the second information I-2, at least one of c1) a position POS of the target, or c2) a probability PROB-LOS that the target TRG is within a line-of-sight region of at least one transmission and reception point TRP, TRP'.

In some examples, Fig. 8, the instructions 106, when executed by the at least one processor 102, cause the apparatus 100 to: evaluate 254 the probability PROB-LOS that the target TRG is within the line-of-sight region of the at least one transmission and reception point TRP, TRP', and, based on the evaluation 254, report 256 at least one of a) the position POS of the target TRG, or b) the probability PROB-LOS that the target TRG is within the line-of-sight region of the at least one transmission and reception point TRP, TRP'.

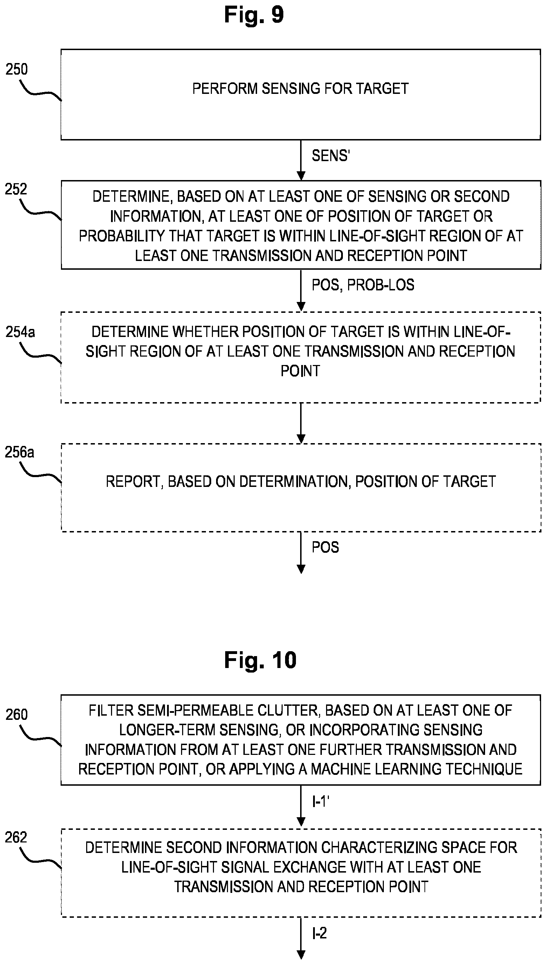

In some examples, Fig. 9, the instructions 106, when executed by the at least one processor 102, cause the apparatus 100 to: determine 254a whether the position POS of the target TRG is within the line-of-sight region of the least one transmission and reception point TRP, TRP', report 256a, based on the determination 254a, the position POS of the target TRG.

In some examples, Fig. 10, the instructions 106, when executed by the at least one processor 102, cause the apparatus 100 to: filter 260 semi-permeable clutter based on at least one of: a) longer-term sensing, or b) incorporating sensing information from at least one further transmission and reception point TRP' (Fig. 2), or c) applying a machine learning technique. In some examples, filtered first information I-1' may be obtained by the filtering 260. In some examples, based on the filtered first information I-1', the second information I-2 may be determined.

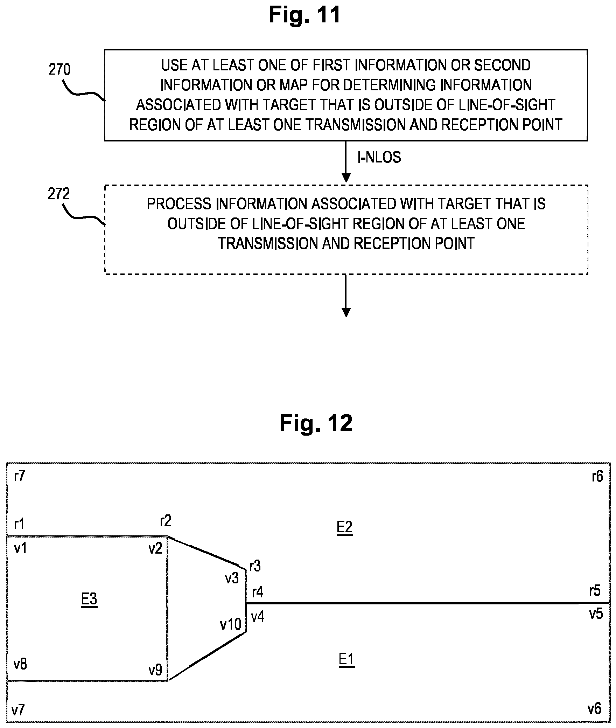

In some examples, Fig. 11, the instructions 106, when executed by the at least one processor 102, cause the apparatus 100 to: use 270 at least one of a) the first information I-1, I-1', or b) the second information I-2, or c) the map MAP-LOS (Fig. 2) for determining information I-NLOS associated with a target that is outside a line-of-sight region of the least one transmission and reception point TRP, TRP'. The optional block 272 of Fig. 11 symbolizes an optional processing of the information I-NLOS associated with the target that is outside a line-of-sight region of the least one transmission and reception point TRP, TRP'.

Some examples, Fig. 1B, relate to an apparatus 100' for a communication system 1000, the apparatus 100' comprising means 102' for: determining 200 first information I-1 characterizing at least one of a) static clutter, or b) semi-static clutter within a region surrounding at least one transmission and reception point, determining 202, based at least on the first information I-1, second information I-2 characterizing a space for line-of-sight signal exchange with the at least one transmission and reception point.

In some examples, Fig. 1B, the means 102' for performing at least some of the aspects 200, 202 may, e.g., comprise at least one processor 102 (see Fig. 1A), and at least one memory 104 storing instructions 106 that, when executed by the at least one processor 102, cause the apparatus 100' to perform at least some of the aspects 200, 202.

In some examples, Fig. 1B, the means 102' for performing at least some of the aspects 200, 202 may, e.g., comprise circuitry 104' configured to perform at least one of the aspects 200, 202.

Some examples, Fig. 2, relate to a network device 10, e.g., base station, e.g., gNB, comprising at least one apparatus 100, 100' according to the disclosure.

In some examples, the network device 10 may be a sensing access point, SAP.

In some examples, the network device 10 may implement a sensing management function, SeMF.

Some examples, Fig. 2, relate to a communication system 1000 comprising at least one apparatus 100, 100' according to the disclosure.

Some examples, Fig. 3, relate to a method for a communication system 1000, comprising: determining 200 first information I-1 characterizing at least one of a) static clutter, or b) semi-static clutter within a region surrounding at least one transmission and reception point, determining 202, based at least on the first information I-1, second information I-2 characterizing a space for line-of-sight signal exchange with the at least one transmission and reception point.

In the following, further aspects and examples are disclosed, which, in some examples, may be combined with at least one of the aspects and/or examples disclosed above.

In some examples, Fig. 2, the principle according to the disclosure may be applied, e.g., for determining, e.g., through sensing, e.g., over a comparatively long period of time, at least one of static clutter CLUT-STAT or semi-static clutter CLUT-SEMI-STAT (e.g., as may be characterized by the first information I-1), e.g., around at least one transmission and reception point TRP, TRP'. In some examples, based on the so determined clutter, a space may be derived in the sensing area that comprises line of sight ("LoS") properties, e.g., at least for one transmission and reception point TRP, TRP'. In some examples, the space may, e.g., be characterized by the second information I-2.

In some examples, e.g., additionally to using sensing, at least one, e.g., non-sensing-based, source may also be used for determining the first information I-1.

In some examples, a modeling format such as, e.g., City Geography Markup Language (CityGML) and information that may be characterized by CityGML or another modeling format for describing, e.g., three-dimensional, city and landscape models, may form such non-sensing-based, source.

In some examples, Fig. 2, a nearest target TRG, e.g., in any direction, e.g., as seen from a transmission and reception point TRP, may determine its LoS space. In some examples, the LoS space may be represented or characterized by a LoS map MAP-LOS.

In some examples, semi-permeable clutter caused by trees and/or fences may be filtered out, e.g., based on longer-term sensing of the TRPs' surroundings, and/or by incorporating clutter measurements from multiple TRPs TRP, TRP'. In some examples, at least one machine learning technique may be used for filtering out semi-permeable clutter.

In some examples, Fig. 2, the LoS map MAP-LOS may indicate a LoS space around at least one transmission and reception point TRP, TRP' of the communication system 1000 or, for example, a radio access network, RAN, of the communication system 1000.

In some examples, Fig. 2, the LoS space around at least one transmission and reception point TRP, TRP' may be described by its boundary, which, in some examples, can be, for example concisely, represented and/or characterized and/or signaled, e.g., between a SeMF and one or more SAPs.

In some examples, the boundary may be characterized or described by a polygon mesh, which may, e.g., be used to describe surfaces in space.

In some examples, a sensing service area, which may, e.g., be supported by the communication system 1000 or its RAN, e.g., for use cases that may use comparatively precise position information, such as, e.g., geo-fencing, may be derived from the LoS map MAP-LOS, e.g., as follows: A) For (quasi- )monostatic radar, the service area may be characterized by a union of all LoS spaces of all transmission and reception points TRP, TRP'. B) For bi-static radar, an intersection of the transmitting and receiving transmission and reception points TRP, TRP' LoS space may characterize the service area of that pair of transmission and reception points. In some examples, an overall sensing service area, e.g., of the communication system 1000 or its RAN, respectively, may be characterized by a union of all these pair-wise service areas.

In some examples, e.g., for other use cases, such as, e.g., indoor intrusion detection, detecting a mere existence of a target may suffice. In some examples, for such use cases, non-LoS, NLoS, sensing may be used. In some examples, a service area of NLoS sensing may be, for example only, limited by a receive signal power including radar processing gain, and, e.g., a use case dependent minimum required radar cross section. In some examples, the information I-NLOS as may be obtained according to some examples, see, for example, block 270 of Fig. 11, may be used for performing the indoor intrusion detection.

In some examples, sensing may be performed, e.g., for detecting targets TRG that are not clutter. In some examples, a position of such targets TRG may be determined and/or evaluated. In some examples, e.g., if a determined, e.g., computed, position of a target lies outside the LoS space of both sensing transmitter and receiver, the target can be assumed to be "NLoS" (e.g., there is no LoS path to the target), and its computed position can be assumed to be incorrect. In some examples, e.g., an SAP may then decide not to report such a target, and/or the SeMF may filter out such targets, e.g., from sensing reports that may be received from SAPs in some examples, and, in some examples, sensing may be retried, e.g., with additional and/or different SAPs.

In some examples, a boundary of a LoS region (e.g., "LoS boundary") may be characterized as follows.

In some examples, the LoS boundary may be characterized by an information element (IE), e.g., a "LoS Boundary IE".

In some examples, a vertex-vertex mesh-based data structure may be used to characterize the LoS boundary, e.g., for defining the "LoS Boundary IE".

In some examples, the vertex-vertex mesh-based data structure may comprise a basic structure as illustrated in the following table, i.e., table 1:

| **IE/Group Name** | | | | **Presence** | **Range** | **IE Type and Reference** | **Semantics Description** |
|---|---|---|---|---|---|---|---|
| **Vertex-Vertex Mesh** | | | | M | *1* | | |
| | **>Vertex Vertex Mesh Item** | | | | *3..*<*maxnoVertices*> | | |
| | | >>Vertex ID | | M | | INTEGER(0..max noVertices-1) | |
| | | >>Vertex Position | | M | | 9.2.46 | Geographical coordinate of the vertex |
| | | **>>Neighbor List** | | M | | | |
| | | | >>>Neighbor ID | M | *2..<maxnoNeighbors>* | INTEGER(0..max noVertices-1 ) | |

As can be seen from table 1, a vertex-vertex mesh may be defined comprising vertex IDs and associated vertex position information. In some examples, the vertex IDs may be represented by integer numbers, e.g., within a predetermined range, e.g., from 0 to a predetermined maximum number, e.g., maxnoVertices-1, wherein, for example maxnoVertices=4096, or the like.

In some examples, the associated vertex position information may, e.g., comprise a format as defined by, or based on some accepted standard, such as, e.g., 3GPP TS 38.455 NRPPa IE 9.2.46. In some examples, other data format(s) may be used for representing vertex position information. In some examples, a, for example more practical, for example comparatively space-efficient, coding of vertex positions may be used, wherein, for example, all vertex positions may be specified relative to, e.g., a common reference point, e.g., as origin of a transmission and reception point's local coordinate system (e.g., "LCS"), e.g., either in Cartesian coordinates (e.g., "X Y Z"), or in spherical coordinates (e.g., comprising a radial distance and, e.g., an azimuth angle, and, e.g., a zenith angle), also see table 2 provided as an example further below.

As can also be seen from table 1, the vertex-vertex mesh may also comprise a neighbor list comprising, for example, a respective neighbor identifier, e.g., "Neighbor ID". In some examples, the "Neighbor ID" may be represented by an integer number, e.g., within the aforementioned predetermined range, up to a predetermined maximum number of neighbors maxnoNeighbors-1 wherein, for example maxnoNeighbors=8, or the like.

Thus, in some examples, a boundary of a LoS region (e.g., "LoS boundary") may be characterized by providing a vertex-vertex mesh having a predetermined number of 3 up to maxnoVertices many items ("vertex vertex mesh item") and a neighbor list having a predetermined number of 2 up to maxnoNeighbors many items, wherein for example an item of the vertex vertex mesh comprises a respective vertex ID and an associated vertex position.

In some examples, the vertex-vertex mesh-based data structure may comprise a basic structure as illustrated in the following table, i.e., table 2:

| **IE/Group Name** | | | | **Presence** | **Range** | **IE Type and Reference** | **Semantics Description** |
|---|---|---|---|---|---|---|---|
| **Vertex-Vertex Mesh** | | | | M | 1 | | |
| | **>Vertex Vertex Mesh Item** | | | | *3..*<*maxnoVertices*> | | |
| | | >>Vertex ID | | M | | INTEGER(0..max noVertices-1 ) | |
| | | » Relative Vertex Position | | M | | cf. *Relative* Vertex *Position* IE | Coordinate of the vertex relative to Origin |
| | | **>>Neighbor List** | | M | | | |
| | | | >>>Neighbor ID | M | *0..*<*maxnoNeighbors*> | INTEGER(0..max noVertices-1 ) | |
| Origin | | | | M | | 9.2.46 | Geographical coordinate of the origin of the LCS |
| LCS to GCS Translation | | | | O | | 9.2.69 | If absent, Azimuth Angle is measured counterclockwise from geographical North at Origin, and Zenith Angle from zenith at Origin; ignored for cartesian coordinates . |

As can be seen from table 2, a vertex-vertex mesh may be defined comprising vertex IDs and associated vertex position information, e.g., similar to table 1. However, in contrast to table 1, table 2 uses a relative vertex position format, e.g., characterizing a position of a vertex with a relative position that is referenced to, e.g. a reference point such as an origin, e.g., LCS origin.

In some examples, LCS to GCS (Global Coordinate System) translation information may optionally be comprised in the data structure as characterized by table 2. In some examples, at least one of the origin information and the LCS to GCS translation information of table 2 may comprise a format as defined by, or based on some accepted standard, such as, e.g., 3GPP TS 38.455 NRPPa IE 9.2.46.

Thus, in some examples, a boundary of a LoS region (e.g., "LoS boundary") may be characterized by providing a vertex-vertex mesh having a predetermined number of 3 up to maxnoVertices many items ("vertex vertex mesh item") and a neighbor list having a predetermined number of 2 up to maxnoNeighbors many items, wherein for example an item of the vertex-vertex mesh comprises a respective vertex ID, an associated relative vertex position, and an associated neighbor list, wherein, an origin information is provided, and wherein, optionally, an LCS to GCS translation information is provided.

In some examples, relative vertex positions may be characterized by a data structure that may comprise a basic structure as illustrated in the following table, i.e., table 3 :

| **IE/Group Name** | | | **Presence** | **Range** | **IE Type and Reference** | **Semantics Description** |
|---|---|---|---|---|---|---|
| CHOICE coordinate system type | | | | | | |
| | >*Cartesian* | | | | | |
| | | >>XYZ unit | M | | ENUMERATED (mm, cm, dm, m, dam, ...) | |
| | | >>X value | M | | INTEGER (-2¹⁵.. 2¹⁵-1 ) | Positive value represents easting from Origin, in units of *XYZ Unit* IE. |
| | | >>Y value | M | | INTEGER (-2¹⁵.. 2¹⁵-1) | Positive value represents northing from Origin, in units of *XYZ Unit* IE. |
| | | >>Z value | M | | INTEGER (-2¹⁵.. 2¹⁵-1) | Height with respect to Origin in units of *XYZ Unit* IE, where the XY-plane is horizontal, and the Z-axis points up to zenith . |
| | >*Spherical* | | | | | |
| | | >>Radial Distance Unit | M | | ENUMERATED (mm, cm, dm, m, dam, ...) | |
| | | >>Radial Distance | M | | INTEGER(0..2¹⁶-1) | Radial distance from Origin in units of *Radial Distance Unit* IE. |
| | | >>Azimuth Angle | M | | INTEGER (-2¹⁵...2¹⁵-1) | Angle to positive X-axis of the orthogonal projection into the XY-plane in radians within interval [-π,π[ as fixed-point representation in units π/2¹⁵ (≈0.0000959) radians. |
| | | >>Zenith Angle | M | | INTEGER(0.. 2¹⁵) | Angle to positive Z-axis of the LCS in radians within interval [0,π] as fixed-point representation with units π/2¹⁵ (≈0.0000959) radians. |

In some examples, as already indicated above, at least one of: a) an origin of the LCS in typically a TRP antenna position to which a specific LoS boundary pertains to may, or b) a Global Coordinate System (GSC) to LCS translation may optionally be given, e.g., to align X-axis respectively azimuth angle zero with, e.g., an antenna's main lobe direction, for which, in some examples, 3GPP TS 38.455 NRPPa IE 9.2.69 LCS to GCS Translation may be used. The 3GPP TS 38.455 NRPPa IE 9.2.69 LCS to GCS Translation contains three angles Alpha, Beta, and Gamma for three consecutive coordinate system rotations according to 3GPP TR 38.901 clause 7.1, to translate between LCS and GCS. By optional convention, in some examples, an infinite distance from Origin may be denoted, e.g., by a Relative Vertex Position information element, in which, e.g., for Cartesian coordinates, one or more of X value, Y value, and Z value is equal to either the minimum or maximum possible value, i.e., at least one of the three may either be -32768 or 32767, and for spherical coordinates, in which Radial Distance is equal to the maximum possible value 65535.

In some examples, the LoS boundary may be presented via its surfaces, also termed as "faces", e.g., in the form of a face-vertex mesh, an example data structure according to some examples is presented below by table 4:

| **IE/Group Name** | | | | **Presence** | **Range** | **IE Type and Reference** | **Semantics Description** |
|---|---|---|---|---|---|---|---|
| **Face-Vertex Mesh** | | | | M | 1 | | |
| | **>Face-Vertex Mesh Item** | | | | *1.*.<*maxnoFaces*> | | |
| | | >>Face ID | | M | | INTEGER(0..max noFaces-1) | |
| | | **>>Vertex List** | | M | | | Ordered set of vertices defining the face |
| | | | >>>Vertex ID | M | *3..4* | INTEGER(0..max noVertices-1) | In case of 4 items, all vertices must be co-planar, i.e., lie on a single plane. |
| **Vertex List** | | | | M | *1* | | |
| | **>Vertex List Item** | | | | *3..*<*maxnoVertices*> | | |
| | | >>Vertex ID | | M | | INTEGER(0..max noVertices-1 ) | |
| | | » Relative Vertex Position | | M | | cf. *Relative Vertex Position* IE | Coordinate of the vertex relative to Origin |
| | | **>>Adjacents List** | | O | | | |
| | | | >>>Face ID | O | *1.*.<*maxnoAdjacents*> | INTEGER(0..max noFaces-1) | |
| Origin | | | | M | | 9.2.46 | Geographical coordinate of the origin of the LCS |
| LCS to GCS Translation | | | | O | | 9.2.69 | If absent, Azimuth Angle is measured counterclockwise from geographical North at Origin, and Zenith Angle from zenith at Origin; ignored for cartesian coordinates . |

In some examples, one or more of the following elements may be predetermined, e.g., standardized: a) maxnoFaces, e.g., denoting a maximum number of faces (example value: 8192), or b) maxnoVertices, e.g., denoting a maximum number vertices (example value: 4096), or c) maxnoAdjacents, e.g., denoting a maximum number of faces adjacent to a vertex (example value: 8) .

Thus, in some examples, a boundary of a LoS region (e.g., "LoS boundary") may be characterized by providing a face-vertex mesh having a predetermined number of 1 up to maxnoFaces many items ("face vertex mesh item") and a vertex list having a predetermined number of 3 up to maxnoVertices many items, wherein for example an item of the face vertex mesh comprises a respective Face ID and an associated Vertex List having, e.g., three or four, vertex IDs. In some examples, origin information may be provided, as illustrated by table 4. In some examples, LCS to GCS translation information may be provided, as illustrated by table 4.

In some examples, while the face-vertex mesh using at least some aspects of the example data structure of table 4 may represent a less efficient encoding than the vertex-vertex mesh as, e.g., illustrated by table 1 or 2, in some examples, it readily provides surfaces, e.g., for testing LoS condition, e.g., for a specific direction.

In some examples, at least one information element as explained above by the examples of tables 1, 2, 3, 4 may be used for transmitting, e.g., signaling, at least one of: a) the second information I-2 (see, for example block 204 of Fig. 3), or b) the third information I-3 (see, for example block 242 of Fig. 3).

In the following, an example scenario for illustrating an application of the LoS boundary according to some examples is provided, referring to the simplified diagram of Fig. 12.

In Fig. 12, element E1 symbolizes a ground, e.g., as "viewed" from a position of an antenna (not shown) of the transmission and reception point TRP (Fig. 2), element E2 symbolizes the sky, and element E3 symbolizes a single building with flat walls. Note that in the present example, for the sake of simplicity, and without loss of generality, the ground E1 is also assumed to be flat.

Further referring to Fig. 12, vertices are denoted with reference signs v1, v2, v3, ..., v10 and r1, r2, r3, ..., r7. In some examples, each vertex rN, N=1...5 lies exactly behind a respective vertex vN with the same number N, as viewed from the TRP respectively its antenna. In other words, in some examples, vertices v1, v2, v3, v4, v5 are located into the same direction but at larger distance from the TRP's antenna than vertices r1, r2, r3, r4, r5.

In some examples, a position of the transmission and reception point TRP (Fig. 2) may be denoted by a "vertex number 0", which is not visible in Fig. 12.

In some examples, vertex rX, X=1...7, and all faces created only by vertices rX, may be assumed to have infinite distance from the transmission and reception point TRP, e.g., if a coding convention of a respective information element, e.g., Vertex Position IE, supports this. Alternatively, in some examples, vertices rX may be chosen to have an arbitrary distance greater than the transmission and reception point's maximum sensing distance R, e.g., such that all faces between these vertices rX can also be considered to be outside the distance R, thereby, e.g., expressing effectively unlimited LoS space, e.g., in all directions intersecting any of the faces created solely by the vertices rl...r7.

In some examples, since the positions of vertices rl...r5 can be computed from the positions of vertices v1, ..., v5, the vertices r1, ..., r5 may be omitted from the LoS Boundary IE. Similarly, in some examples, vertices r6 and r7, which are at the edges of the maximum sensing coverage area of the transmission and reception point TRP in angular space (azimuth and zenith angle), which is known, may therefore be omitted, too. Accordingly, in some examples, all vertices rX and their adjacent faces may be omitted from a LoS Boundary IE, in which case all directions not covered by faces of the LoS Boundary IE may implicitly be assumed to be covered by faces between such rX vertices at infinite range (or by rX outside the TRP's maximum sensing range).

In some examples, the complete LoS boundary may be automatically recreated from such a LoS Boundary IE stripped of all rX vertices by adding, for every vertex X located at the edge of the polygon mesh described by the stripped down minimal LoS Boundary IE, the respective vertex rX, plus any further rX at the edges of the maximum sensing coverage area.

In some examples, Fig. 12, the surfaces of Ground E1, Building E3, Sky E2, radial surfaces between rX vertices of Sky E2 (e.g., at infinite distance) and vertices of Ground E1 and Building E2 (e.g., at finite distance less than R), and surfaces, which include the antenna of the transmission and reception point, e.g., as one vertex, and which limit the sensing coverage area, may, in some examples, be tiled, e.g., as follows, e.g., solely with triangle faces, numbered f0 trough f30, as illustrated by table 5:

| Ground | Building | Sky | Radial surfaces | Limits of coverage |
|---|---|---|---|---|
| **f0: v7 v8 v9** | **f5: v8 v1 v2** | f9: r1 r7 r6 | f14: v1 r1 r7 | f24: v0 v7 v8 |
| **f1: v7 v9 v6** | **f6: v8 v2 v9** | f10: r1 r6 r2 | f15: v1 r1 r2 | f25: v0 v8 v1 |
| **f2: v6 v9 v10** | **f7: v9 v2 v3** | f11: r2 r6 r3 | f16: v1 r2 v2 | f26: v0 v1 r7 |
| **f3: v6 v10 v4** | **f8: v9 v3 v10** | f12: r3 r6 r5 | f17: v2 r2 r3 | f27: v0 r7 r6 |
| **f4: v6 v4 v5** | | f13: r3 r5 r4 | f18: v2 r3 v3 | f28: v0 r6 v5 |
| | | | f19: v3 r3 r4 | f29: v0 v5 v6 |
| | | | f20: v3 r4 v4 | f30: v0 v6 v7 |
| | | | f21: v4 r4 r5 | |
| | | | f22: v4 r5 v5 | |
| | | | f23: v5 r5 r6 | |

Table 6 illustrates neighbors of each vertex and adjacent faces of each vertex in some examples:

| Neighbors of each vertex (vertex-vertex mesh) | Adjacent faces of each vertex (face-vertex mesh) |
|---|---|
| v0: v1 v5 v6 v7 v8 r6 r7 | v0: f24 f25 f26 f27 f28 f29 f30 |
| **v1:** v0 **v2 v8** r1 r2 r7 | **v1:** f5 f14 f15 f16 f25 f26 |
| **v2:** v1 **v3 v8 v9** r2 r3 | **v2:** f5 f6 f7 f16 f17 f18 |
| **v3:** v2 **v4 v9 v10** r3 r4 | **v3:** f7 f8 f18 f19 f20 |
| **v4:** v3 **v5 v6 v10** r4 r5 | **v4:** f3 f4 f20 f21 f22 |
| **v5:** v0 v4 **v6** r5 r6 | **v5:** f4 f22 f23 f28 f29 |
| **v6:** v0 v4 v5 **v7 v9 v10** | **v6:** f1 f2 f3 f4 f29 f30 |
| **v7:** v0 v6 **v8 v9** | **v7:** f0 f1 f24 f30 |
| **v8:** v0 v1 v2 v7 **v9** | **v8:** f0 f5 f6 f24 f25 |
| **v9:** v2 v3 v6 v7 v8 **v10** | **v9:** f0 f1 f2 f6 f7 f8 |
| **v10:** v3 v4 v6 v9 | **v10:** f2 f3 f8 |
| r1: v1 r2 r6 r7 | r1: f9 f10 f14 f15 |
| r2: v1 2 r1 r3 r6 | r2: f10 f11 f15 f16 f17 |
| r3: v2 3 r2 r4 r5 r6 | r3: f11 f12 f13 f17 f18 f19 |
| r4: v3 4 r3 r5 | r4: f13 f19 f20 f21 |
| r5: v4 5 r3 r4 r6 | r5: f12 f13 f21 f22 f23 |
| r6: v0 5 r1 r2 r3 r5 r7 | r6: f9 f10 f11 f12 f23 f27 f28 |
| r7: v0 1 r1 r6 | r7: f9 f14 f26 f27 |

In some examples, an LoS boundary information element may be provided, using a coding based on a vertex-vertex mesh, in the form of the left column of table 6, e.g. characterizing a list of vertices with their respective positions and neighbours (note that positions are not explicitly included in table 6, but in the present example, the colon behind each vertex ID "v01", "v02", ... may be considered as a placeholder for its position information).

In some examples, an LoS boundary information element may be provided, using a coding based on a face-vertex mesh, in the form of the right column of table 6 ("Adjacent faces of each vertex", namely the list of vertices with positions and their adjacent faces, wherein the latter may be omitted, since the adjacent faces can be computed from the faces table), together with the contents of table 5, which characterizes the faces.

In some examples, a reduced, e.g., minimal, LoS Boundary IE may, e.g., only, encode what is marked in bold text in the above tables, 5, 6, e.g., only vertices v1, ..., v10 and, in case of a face-vertex mesh, the faces f0, ..., f8 created by the vertices v1, ..., v10, respectively in case of a vertex-vertex mesh, with every neighbor relation signaled only once, e.g., by including in Neighbor List of each Vertex Vertex Mesh Item only Neighbor IDs greater than respective Vertex ID.

In some examples, a polygon mesh described by the LoS Boundary IE, some examples of which have been presented for illustration purposes above, may separate a space around the transmission reception point TRP (Fig. 2) that is considered LoS for this transmission reception point TRP, e.g., LoS space SP-LOS, from the rest of space, e.g., portions of space where, for example, nLoS signal propagation conditions apply.

In some examples, a check whether a target position is within the LoS space or not may, e.g., comprise: In case of monostatic sensing, the target position is LoS, if a line segment between the position of the transmission and reception point TRP and the target position does not intersect the LoS boundary (e.g., at a distance less than a maximum sensing distance R). In some examples, in bistatic sensing, the target position is LoS, if the target is LoS with respect to both a transmitting transmission and reception point TRP and a receiving transmission and reception point TRP'.

In some examples, e.g., alternatively, e.g., in case the LoS boundary intersects the space around a target TRG (Fig. 2) as described by its location uncertainty, the target location may be considered LoS with a certain probability, e.g., depending on the (e.g., shortest) distance between target and LoS boundary in relation to the extent of the target's location uncertainty (e.g., in that direction), e.g., in addition to just whether it is located inside or outside the LoS space.

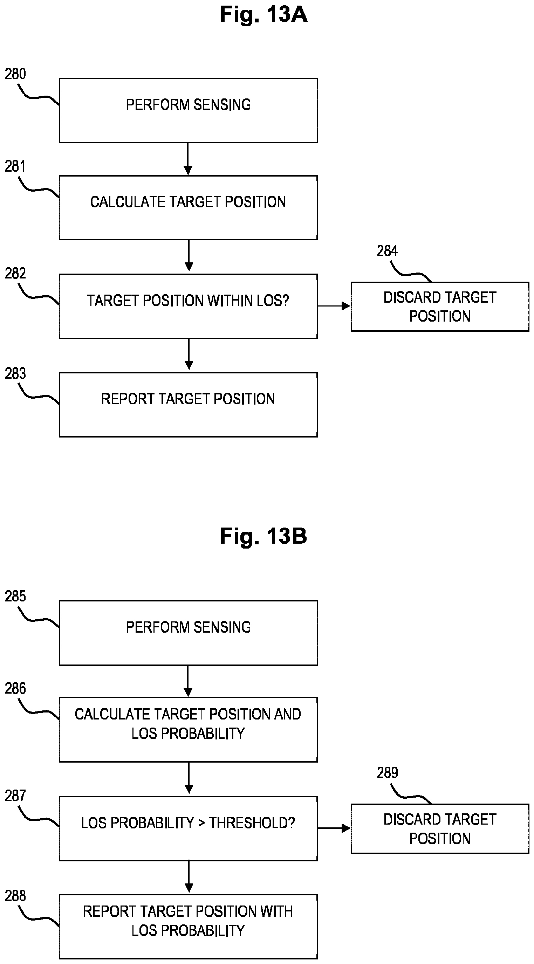

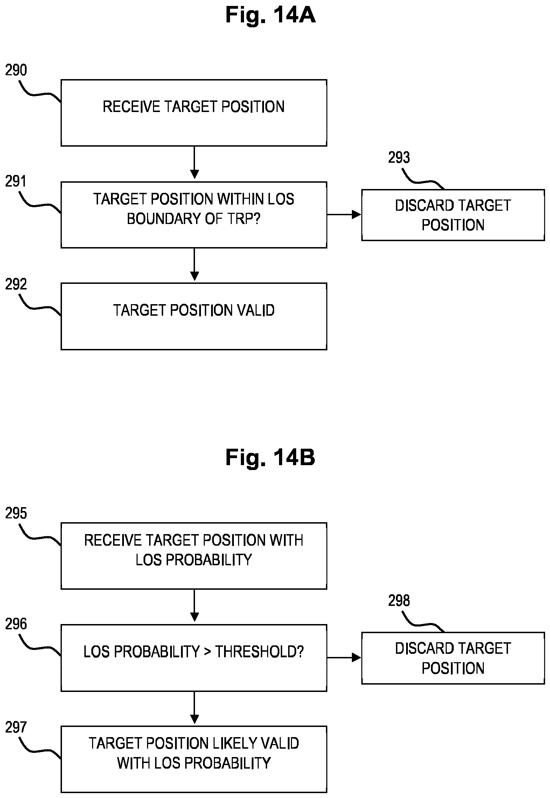

In some examples, a result of an LoS check for a target position may be used, as shown in the following Figures 13A, 13B, 14A, 14B, e.g., for targets (a) without location uncertainty (see Fig. 13A, 14A) and for targets (b) with location uncertainty (see Fig. 13B, 14B), e.g., by an SAP, e.g., to filter out likely invalid target positions, e.g., before reporting them to, e.g., an SeMF, and by the SeMF, e.g., to filter out target positions, e.g., before further processing like merging/averaging with further target measurements from other transmission and reception points, eventually retrying with a different transmission and reception point TRP'.

Fig. 13A illustrates aspects of sensing, e.g., related to an SAP (Sensing Access Point), according to some examples. Block 280 symbolizes performing sensing, block 281 symbolizes determining, e.g., calculating, a position POS of a target TRG (Fig. 2), e.g., based on the sensing 281. Block 282 symbolizes determining whether the position POS of the target is within a LoS space, e.g., with respect to a specific transmission and reception point TRP, e.g., based on a LOS map MAP-LOS (Fig. 2) as determined according to the principle of the disclosure. If so, e.g., if the determination 282 yields that the position POS of the target is within a LoS space, the procedure continues with reporting 283 the target position POS, e.g., to another entity, e.g., an SeMF entity. If not, e.g., if the determination 282 yields that the position POS of the target is not within the LoS space, the target position may be discarded, see block 284.

Fig. 13B illustrates aspects of sensing, e.g., related to an SAP (Sensing Access Point), according to some examples. Block 285 symbolizes performing sensing, block 286 symbolizes determining, e.g., calculating, a position POS of a target TRG (Fig. 2) and an associated LOS probability (e.g., indicating the probability that the target TRG or its position POS, respectively, is in LoS conditions), e.g., based on the sensing 285. Block 287 symbolizes determining whether the LOS probability exceeds a predetermined first threshold. If so, e.g., if the LOS probability exceeds the predetermined first threshold, the procedure continues with reporting 288 the target position POS, e.g., to another entity, e.g., an SeMF entity, e.g., together with the LOS probability. If not, e.g., if the determination 282 yields that the LOS probability does not exceed the predetermined first threshold, the target position may be discarded, see block 289.

Fig. 14A illustrates aspects of processing a received target position POS, e.g., related to an SeMF (Sensing Management Function), according to some examples. Block 290 symbolizes receiving the target position POS, e.g., from an SAP. Block 291 symbolizes determining whether the received target position POS is within a LOS boundary of a specific transmission and reception point TRP. If so, in block 292, the received target position POS may be considered to be valid. If not, in some examples, the target position may be discarded, see block 293.

Fig. 14B illustrates aspects of processing a received target position POS and a received associated LOS probability of the target position POS, e.g., related to an SeMF (Sensing Management Function), according to some examples. Block 295 symbolizes receiving the target position POS together with an associated LOS probability, e.g., from an SAP. Block 296 symbolizes determining whether the received LOS probability exceeds a predetermined second threshold. If so, in block 297, the received target position POS may be considered to be likely valid with the associated LOS probability. If not, in some examples, the target position may be discarded, see block 298.

Some examples, Fig. 15, relate to a computer program PRG comprising instructions INSTR which, when executed by an apparatus 100, 100', cause the apparatus 100, 100' to perform at least some aspects of the method according to the disclosure.

In some examples, Fig. 15, the computer program PRG may be provided on a computer readable storage medium SM, e.g., a non-transitory computer readable medium SM.

Some examples, Fig. 15, relate to a data carrier signal DCS carrying and/or characterizing the computer program PRG according to the disclosure.

In some examples, the principle of the disclosure may e.g. be applied to sensing techniques which are based on OFDM radar, which, in some examples, may allow to use signals of a wireless communication system, e.g., of the 5G NR type, for sensing purposes, as well as for flexibly sharing radio resources with communication services, e.g., within a common radio frame, thus, e.g., resulting in an integrated sensing and communication (ISAC) or joint communication and sensing (JCAS) system.

In some examples, the principle of the disclosure may e.g. be applied to sensing techniques based on monostatic or bistatic radar. As an example, in (quasi) monostatic radar, transmit and receive antenna panels are located close to each other, e.g., mounted on a common pole, e.g., one above the other, e.g., in adequate distance, e.g., to mitigate self-interference. In some examples, transmit and receive antenna panels may be integrated into, e.g., a common antenna housing, e.g., with shielding in between the different antenna panels. In some examples, it may be possible to split a large antenna panel in one transmit and one receive part, e.g., for performing sensing, while using the full antenna panel for communication (e.g., at least in a receive direction). In some examples, in bistatic radar, two different transmission and reception point(s) (TRP), e.g., of a RAN and/or a UE may be used, e.g., as sensing transmitter (Tx) and/or receiver (Rx), respectively. In some examples, this may create in total six sensing variants, two monostatic and four bistatic (Tx, Rx) pairs: (TRP1,TRP1), (UE1,UE1), (TRP1,TRP2), (TRP1,UE1), (UE1,TRP1), (UE1,UE2).

In some examples, the principle of the disclosure may e.g. be applied together with OFDM radar, which may, e.g., be applied within a 3GPP 5G or future 6G RAN, e.g., without requiring special waveforms, i.e., a sensing transmitter (TRP or UE) may transmit standard OFDM waveform and radio frame, using one or more standard reference signals like PRS, DM-RS, SRS, PSS, SSS, and/or (shared channel) data transmissions. In some examples, a sensing receiver may first divide the received signal, i.e., by the known transmit signal. In some examples, secondly, the sensing receiver may calculate, e.g., for one or more or all OFDM subcarriers (or a subset of, e.g., equally spaced subcarriers thereof), first an iFFT (inverse Fast Fourier Transform) over (a subset of equally spaced and zero-padded to the next power of two) OFDM symbols in time, and of the result an FFT over the subcarriers in frequency (zero-padded to the next power of two). In some examples, this may yield a two-dimensional periodogram, e.g., plotting received power over dimensions distance (also called "range" in radar terminology) and relative radial speed (e.g., equivalent to Doppler shift). In some examples, a peak in the periodogram may relate to a probable reflection from a target at a respective distance from the sensing receiver and of respective radial speed.

In some examples, e.g., with a beam-based air interface of 5G NR and future 6G, such a periodogram may be created for each transmit/receive beam. In some examples, a position of a target in three-dimensional space relative to the sensing receiver may be determined, e.g., by (a weighted average/interpolation of) azimuth and zenith angle(s) of arrival (=angle of departure in the monostatic case) of the receive beam(s) and ranges taken from the periodogram(s). In some examples, for bi-static radar, the sensing receiver may additionally use a (relative) position of the sensing transmitter, e.g., to compute the target's position, which is the point of intersection of observed angle of arrival ray with an ellipse with major axis equal to the measured range, and sensing transmitter and receiver as its focal points.

In some examples, the principle of the disclosure may e.g. be applied for non-line of sight (NLoS) sensing.

In some examples, the principle of the disclosure may e.g. be used to determine whether a detected target is "LoS" or "NLoS". In some examples, the principle of the disclosure may e.g. be used to create the LoS map MAP-LOS. In some examples, e.g., if the calculated position of a target lies outside the area known to be LoS according the LoS map, the sensing signal path was likely NLoS and its computed position can be assumed to be wrong.

## Claims

1. An apparatus (100) for a communication system (1000), the apparatus (100) comprising at least one processor (102), and at least one memory (104) storing instructions (106) that, when executed by the at least one processor (102), cause the apparatus (100) to: determine (200) first information (I-1) characterizing at least one of a) static clutter (CLUT-STAT), or b) semi-static clutter (CLUT-SEMI-STAT) within a region (R-TRP) surrounding at least one transmission and reception point (TRP), determine (202), based at least on the first information (I-1), second information (I-2) characterizing a space (SP-LOS) for line-of-sight signal exchange with the at least one transmission and reception point (TRP).

2. The apparatus (100) according to claim 1, wherein the second information (I-2) represents a map (MAP-LOS) for the line-of-sight signal exchange with the at least one transmission and reception point (TRP).

3. The apparatus (100) according to any of the preceding claims, wherein the instructions (106), when executed by the at least one processor (102), cause the apparatus (100) to: transmit (204) the second information (I-2).

4. The apparatus (100) according to any of the preceding claims, wherein the instructions (106), when executed by the at least one processor (102), cause the apparatus (100) to: perform (210) sensing (SENS), using at least one signal (SIG-1000) associated with the communication system (1000), determine (212) the first information (I-1) based at least on the sensing (SENS).

5. The apparatus (100) according to any of the preceding claims, wherein the instructions (106), when executed by the at least one processor (102), cause the apparatus (100) to perform at least one of: a) performing (220) at least one of a1) the determining (200) of the first information (I-1), or a2) the sensing (SENS) for a predetermined time (T-PRED), or b) performing (222) repeatedly at least one of b1) the determining (200) of the first information (I-1), or b2) the sensing (SENS).

6. The apparatus (100) according to claim 5, wherein the predetermined time (T-PRED) is equal to or exceeds at least one of: a) a multiple of a symbol duration of the communication system, or b) one minute.

7. The apparatus (100) according to any of the preceding claims, wherein the instructions (106), when executed by the at least one processor (102), cause the apparatus (100) to: determine (230) model information (I-MOD) characterizing at least one aspect of the region (R-TRP) surrounding at least one transmission and reception point (TRP), determine (232) at least one of first information (I-1) and second information (I-2) based on the model information (I-MOD).

8. The apparatus (100) according to any of the preceding claims, wherein the instructions (106), when executed by the at least one processor (102), cause the apparatus (100) to: determine (240) third information (I-3) characterizing a boundary (SP-LOS-BOUND) of the space (SP-LOS) for line-of-sight signal exchange with the at least one transmission and reception point (TRP), signal (242) at least a portion (SP-LOS-BOUND') of the boundary (SP-LOS-BOUND) using the third information (I-3).

9. The apparatus (100) according to any of the preceding claims, wherein the instructions (106), when executed by the at least one processor (102), cause the apparatus (100) to: perform (250) sensing (SENS') for a target (TRG), determine (252), based on at least one of a) the sensing (SENS'), or b) the second information (I-2), at least one of c1) a position (POS) of the target (TRG), or c2) a probability (PROB-LOS) that the target (TRG) is within a line-of-sight region of at least one transmission and reception point (TRP).

10. The apparatus (100) according to claim 9, wherein the instructions (106), when executed by the at least one processor (102), cause the apparatus (100) to: evaluate (254) the probability (PROB-LOS) that the target (TRG) is within the line-of-sight region of the at least one transmission and reception point (TRP), and, based on the evaluation (254), report (256) at least one of a) the position (POS) of the target (TRG), or b) the probability (PROB-LOS) that the target (TRG) is within the line-of-sight region of the at least one transmission and reception point (TRP).

11. The apparatus (100) according to claim 9, wherein the instructions (106), when executed by the at least one processor (102), cause the apparatus (100) to: determine (254a) whether the position (POS) of the target (TRG) is within the line-of-sight region of the least one transmission and reception point (TRP), report (256a), based on the determination (254a), the position (POS) of the target (TRG).

12. The apparatus (100) according to any of the preceding claims, wherein the instructions (106), when executed by the at least one processor (102), cause the apparatus (100) to: filter (260) semi-permeable clutter based on at least one of: a) longer-term sensing, or b) incorporating sensing information from at least one further transmission and reception point, or c) applying a machine learning technique.

13. The apparatus (100) according to any of the preceding claims, wherein the instructions (106), when executed by the at least one processor (102), cause the apparatus (100) to: use (270) at least one of a) the first information (I-1), or b) the second information (I-2), or c) the map (MAP-LOS) for determining information (I-NLOS) associated with a target that is outside a line-of-sight region of the at least one transmission and reception point (TRP).

14. An apparatus (100') for a communication system (1000), the apparatus (100') comprising means (102') for: determining (200) first information (I-1) characterizing at least one of a) static clutter (CLUT-STAT), or b) semi-static clutter (CLUT-SEMI-STAT) within a region (R-TRP) surrounding at least one transmission and reception point (TRP), determining (202), based at least on the first information (I-1), second information (I-2) characterizing a space (SP-LOS) for line-of-sight signal exchange with the at least one transmission and reception point (TRP).

15. A method for a communication system (1000), comprising: determining (200) first information (I-1) characterizing at least one of a) static clutter (CLUT-STAT), or b) semi-static clutter (CLUT-SEMI-STAT) within a region (R-TRP) surrounding at least one transmission and reception point (TRP), determining (202), based at least on the first information (I-1), second information (I-2) characterizing a space (SP-LOS) for line-of-sight signal exchange with the at least one transmission and reception point (TRP).
